# EUROPÄISCHE PATENTANMELDUNG

(11) **EP 4 461 503 A1**
(43) Veröffentlichungstag der Anmeldung: **13.11.2024**
(21) Anmeldenummer: 23172112.7
(22) Anmeldetag: 08.05.2023
(51) Int. Cl.: B29C 45/14, B29C 45/73, B29C 45/00, B29C 45/27

(54) **VERFAHREN ZUR HERSTELLUNG EINES BAUTEILS MIT EINER SPRITZGIESSVORRICHTUNG UND SPRITZGIESSVORRICHTUNG**

(71) Anmelder: PEX Automotive GmbH, 72800 Eningen unter Achalm (DE)
(72) Erfinder: Bencsik, Miklós, 2030 Érd (HU)
(74) Vertreter: Patentanwälte Ruff, Wilhelm, Beier, Dauster & Partner mbB

(57) **Zusammenfassung**

Bei einem Verfahren zur Herstellung eines Bauteils durch vollständiges Umspritzen eines Einlegeteils (1) wird es zunächst in einen Hohlraum (4) eines Formwerkzeugs (3) einer Spritzgießvorrichtung (2) zugeführt und mittels mehrerer Halteelemente (7) in dem Hohlraum (4) in einer vorgegebenen Position fixiert. So ist es von Wandungen (9) des Hohlraums (4) beabstandet angeordnet und begrenzt gemeinsam mit diesen Wandungen (9) einen Füllraum (10). Anschließend wird ein spritzfähiges Material (M) in den Hohlraum (4) mittels einer ersten Einspritzdüse (5) zum mindestens teilweisen Füllen des Füllraums (10) mit dem Material (M) gefördert, so dass das Einlegeteil (1) teilweise von dem Material (M) umgeben ist. Danach wird dieses Material (M) mittels einer Kühlvorrichtung (8) aktiv gekühlt, so dass es erstarrt und das Einlegeteil (1) mittels des erstarrten Materials (M') in der vorgegebenen Position fixiert ist. Dann werden die Halteelemente (7) von dem Einlegeteil (1) entfernt und weiteres spritzfähiges Material (M) wird zum vollständigen Füllen des Füllraums (10) mit dem Material (M) in den Hohlraum (4) mittels einer zweiten Einspritzdüse (6) gefördert.

## Beschreibung

### ANWENDUNGSGEBIET UND STAND DER TECHNIK

Die Erfindung bezieht sich auf ein Verfahren zur Herstellung eines Bauteils, insbesondere eines Hybrid-Bauteils, durch vollständiges Umspritzen eines Einlegeteils mit bzw. in einer Spritzgießvorrichtung. Die Erfindung bezieht weiter auf eine Spritzgießvorrichtung zur Durchführung solch eines Verfahrens.

Ein Verfahren dieser Art dient dazu, Einlegeteile mit einem Material, insbesondere einem Kunststoffmaterial, vollständig zu umspritzen bzw. zu ummanteln, zum Beispiel zur elektrischen Isolierung oder zum Korrosionsschutz. Bei herkömmlichen Verfahren erfolgt dies entweder in einem Schritt, wobei die zur Positionierung des Einlegeteils vorgesehenen Halteelemente während des Förderns des spritz- oder gießfähigen Materials in das Formwerkzeug aus dem Formwerkzeug entfernt werden, oder in zwei Schritten, wobei am Ende des zweiten Schritts das Einlegeteil vorzugsweise lückenlos von Kunststoff bedeckt ist. Insbesondere bei den einschrittigen Verfahren werden die Halteelemente im spritz- bzw. gießfähigen Zustand des im Formwerkzeug befindlichen Materials aus dem Formwerkzeug entfernt, so dass die Einlegeteile nach dem Entfernen der Halteelemente aus dem Formwerkzeug lediglich von dem noch spritz- oder gießfähigen Material im Formwerkzeug in Position gehalten werden.

Die DE 10 2018 203 704 A1 offenbart ein Verfahren der eingangs genannten Art. Bei diesem Verfahren wird ein Einlegeelement bereitgestellt und in einen Hohlraum eines Formwerkzeugs zugeführt. Anschließend wird das Einlegeelement in dem Hohlraum des Formwerkzeugs mittels eines oder mehrerer Fixierelemente durch Anlegen des einen oder der mehreren Fixierelemente an einer Oberfläche des Einlegeelements fixiert. So ist das Einlegeelement von einer Wandung des Hohlraums des Formwerkzeugs beabstandet angeordnet und begrenzt gemeinsam mit der Wandung einen Füllraum. Danach wird ein spritzfähiges Material in den Hohlraum des Formwerkzeugs zum vollständigen Füllen des Füllraums mit dem Material gefördert. Dabei wird das eine oder die mehreren Fixierelemente von der Oberfläche des Einlegeelements entfernt, bevor der Füllraum vollständig mit dem spritzfähigen Material gefüllt ist.

Aus der DE 10 2017 219 891 A1 ist ein Umspritzverfahren für eine Sensoreinheit bekannt, wobei die Sensoreinheit in eine Kavität eines Umspritzwerkzeugs eingelegt wird, welche zwischen mindestens zwei Werkzeugteilen ausgebildet ist. Dabei wird die Sensoreinheit derart in der Kavität positioniert, dass mindestens zwei Positionierstifte des Umspritzwerkzeugs zumindest teilweise in korrespondierende Vertiefungen in einem Halter der Sensoreinheit eingeführt werden, welche an gegenüberliegenden Außenseiten in den Halter eingebracht sind. Anschließend wird die Kavität des Umspritzwerkzeugs mit einer Kunststoffmasse bis zu einem vorgegebenen Füllstand gefüllt. Dabei werden die Positionierstifte nach Erreichen des vorgegebenen Füllstands aus der Kavität gezogen, und die Kavität wird nach dem Ausfahren der Positionierstifte vollständig mit der Kunststoffmasse gefüllt.

### AUFGABE UND LÖSUNG

Der Erfindung liegt die Aufgabe zugrunde, ein eingangs genanntes Verfahren sowie eine eingangs genannte Spritzgießvorrichtung zu schaffen, die gegenüber dem Stand der Technik verbesserte Eigenschaften insbesondere hinsichtlich Funktionsweise, Dichtheit, Positioniergenauigkeit des Einlegeteils und/oder Produktivität bieten und es insbesondere ermöglichen, Bauteile bzw. Hybrid-Bauteil vorteilhaft herstellen zu können.

Die Erfindung löst diese Aufgabe durch ein Verfahren mit den Merkmalen des Anspruchs 1 sowie durch eine Spritzgießvorrichtung mit den Merkmalen des Anspruchs 11. Vorteilhafte sowie bevorzugte Weiterbildungen der Erfindung sind in den weiteren Ansprüchen angegeben, deren Wortlaut hiermit durch ausdrückliche Bezugnahme zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind. Dabei werden manche der Merkmale nur für die Spritzgießvorrichtung oder nur für das Verfahren genannt. Sie sollen jedoch unabhängig davon sowohl für eine Spritzgießvorrichtung als auch für ein Verfahren zur Herstellung eines Bauteils durch vollständiges Umspritzen eines Einlegeteils mit einer Spritzgießvorrichtung selbstständig und unabhängig voneinander gelten können.

Die Spritzgießvorrichtung weist ein Formwerkzeug mit einem Hohlraum mit Wandungen, eine erste und eine zweite Einspritzdüse zum Fördern eines spritz- oder gießfähigen Materials in das Formwerkzeug sowie mindestens ein Halteelement zum Fixieren des Einlegeteils in dem Hohlraum des Formwerkzeugs auf. Bei dem Verfahren wird das Einlegeteil zunächst in den Hohlraum des Formwerkzeugs der Spritzgießvorrichtung zugeführt und in dem Hohlraum in einer vorgegebenen Position mittels des mindestens einen Halteelements fixiert, so dass das Einlegeteil von den Wandungen des Hohlraums beabstandet angeordnet ist und gemeinsam mit diesen Wandungen einen Füllraum begrenzt. Dabei kann der Füllraum vorteilhaft an mindestens einer Seite offen sein, insbesondere in den sonstigen Hohlraum hinein. Dann wäre der Füllraum ein Abschnitt oder eine gewählte Abgrenzung innerhalb des Hohlraums. Anschließend wird das spritz- oder gießfähige Material in den Hohlraum mittels der Einspritzdüsen zum Füllen des Füllraums mit diesem Material gefördert. Bei dem erfindungsgemäßen Verfahren wird das spritz- oder gießfähige Material zum mindestens teilweisen Füllen des Füllraums mit dem Material in den Hohlraum mittels der ersten Einspritzdüse gefördert, so dass das Einlegeteil teilweise von dem Material umgeben ist. Dies kann als Formschluss erfolgen, vorteilhaft noch mit Hinterschneidungen, es muss aber nicht so sein. Anschließend wird das in das Formwerkzeug geförderte Material mittels einer Kühlvorrichtung aktiv gekühlt, so dass das Material erstarrt und das Einlegeteil mittels des erstarrten Materials in der vorgegebenen Position fixiert ist. Dazu weist die Spritzgießvorrichtung eine aktive Kühlvorrichtung zum Kühlen des in den Hohlraum geförderten Materials auf, die aktiviert und deaktiviert werden kann. Dabei kann die aktive Kühlvorrichtung beispielsweise ein Peltier-Element, ein Temperiergerät zur variothermen Temperierung oder eine Kühleinheit mit Stickstoff sein, ebenso nach anderen vorteilhaften Verfahren. Danach wird das mindestens eine Halteelement von dem Einlegeteil entfernt, und dann wird weiteres spritz- oder gießfähiges Material zum vollständigen Füllen des Füllraums mit diesem Material in den Hohlraum mittels der zweiten Einspritzdüse gefördert.

Das mindestens eine Halteelement wird vorzugsweise aus dem Hohlraum hinausbewegt, wobei insbesondere eine Stirnseite des mindestens einen Halteelements nach diesem Hinausbewegen bündig mit einer der Wandungen des Hohlraums bzw. des Formwerkzeugs ist. So kann auch in diesem Bereich, in den dann weiteres Material gespritzt wird, eine gewünschte bzw. glatte Außenkontur erzeugt werden.

Durch das aktive Kühlen des in das Formwerkzeug geförderten Materials und des dadurch hervorgerufenen Erstarrens des Materials wird sichergestellt, dass das Einlegeteil auch dann, wenn das mindestens eine Halteelement von ihm entfernt worden ist, durch das erstarrte Material in seiner vorgegebenen Position fixiert ist. In anderen Worten ausgedrückt fungiert das erstarrte Material dann als Halteelement für das Einlegeteil, so dass das zuerst verwendete Halteelement entfernt werden kann und insbesondere alle Halteelemente von dem Einlegeteil entfernt werden können.

In einer Weiterbildung der Erfindung erfolgt das teilweise Füllen des Füllraums mit dem Material bis zu einem vorgegebenen Füllstand. Dies stellt eine konstruktiv und funktionell vorteilhafte Realisierung des Verfahrens dar. Denn durch den vorgegebenen Füllstand wird sichergestellt, dass das Einlegeteil durch das erstarrte Material in seiner vorgegebenen Position fixiert ist bzw. in dieser verbleibt, also gehalten wird. Dies kann vorteilhaft an Kanten und an Ecken des Einlegeteils erfolgen. Der vorgegebene Füllstand beträgt vorzugsweise bis zu 20% bis 70% des Volumens des Füllraums, insbesondere 35% bis 50%.

In einer Weiterbildung der Erfindung erfolgt das teilweise Füllen des Füllraums mit dem Material bis zu einem Füllstand, bei welchem das Einlegeteil zumindest zu 30% von dem Material umgeben ist. Vorzugsweise kann dieses Füllen zumindest zu 50% erfolgen.

Zusätzlich oder alternativ kann das teilweise Füllen des Füllraums mit dem Material bis zu einem Füllstand erfolgen, bei welchem mindestens zwei Seiten des Einlegeteils mit dem Material zumindest teilweise umgeben sind, insbesondere zumindest zu 30% bis 60%. Vorteilhaft sind dies entweder zwei in etwa gegenüberliegende Seiten, die so das gesamte Einlegeteil fest zwischen sich halten für das restliche Verspritzen. Es können auch zwei aneinandergrenzende Seiten sein, die dadurch das Einlegeteil fest zwischen sich halten.

In einer Weiterbildung der Erfindung erfolgt das teilweise Füllen des Füllraums mit dem Material in einem von dem mindestens einen Halteelement abgewandten Bereich des Füllraums. Dies stellt eine konstruktiv und funktionell vorteilhafte Realisierung des Verfahrens dar, da es ermöglicht, den Füllraum mit dem Material bis zu einem, vorzugsweise vorgegebenen, Füllstand zu füllen, ohne dass dabei das mindestens eine Halteelement mit dem Material in Kontakt kommt. So kann das Halteelement sauber gehalten werden.

In einer Weiterbildung der Erfindung erfolgt das aktive Kühlen des in den Hohlraum geförderten Materials mittels der Kühlvorrichtung innerhalb von 10 sec, vorzugsweise innerhalb von 5 sec, insbesondere abhängig von Material- und Produkteigenschaften. Dies stellt eine konstruktiv und funktionell vorteilhafte Realisierung des Verfahrens dar, insbesondere hinsichtlich seiner Produktivität, da die Dauer nicht zu lange ist. Dabei kann die Dauer für das aktive Kühlen des Materials je nach verwendetem Material und/oder je nach der Menge des verwendeten Materials und/oder je nach der Bauteilgeometrie variieren. Die Dauer für das aktive Kühlen ist demnach von den Material- und Produkteigenschaften abhängig.

In einer Weiterbildung der Erfindung wird das in den Hohlraum geförderte Material mittels der Kühlvorrichtung auf eine Temperatur von unter 190°C bis 240°C gekühlt, vorzugsweise auf eine Temperatur von 150°C bis zu 200°C, insbesondere an einem Grenzbereich zu dem Einlegeteil oder an der Wandung des Hohlraums. Dies stellt eine konstruktiv und funktionell vorteilhafte Realisierung des Verfahrens dar, insbesondere hinsichtlich der Positionierung des Einlegeteils bzw. der Haltefunktion des erstarrten Materials für das Einlegeteil. Die Erstarrungstemperatur ist dabei in der Regel material- und geometrieabhängig. Dabei wird vorzugsweise das in den Hohlraum geförderte Material auf eine Temperatur bzw. in einen Temperaturbereich abgekühlt, bei welchem das Material zumindest in einem zähharten bzw. teilkristallinen, vorzugsweise in einem harten bzw. kristallinen, Zustand vorliegt. Alternativ wird das in den Hohlraum geförderte Material mittels der Kühlvorrichtung um 150°C bis 200°C herunter gekühlt, insbesondere bis ein Zustandsbereich des verwendeten Materials erreicht wird, bei welchem es zumindest zähhart bzw. teilkristallin, vorzugsweise hart bzw. kristallin, ist. Dies ist auch wieder material- und geometrieabhängig. Die Temperatur, bei welcher das Material zumindest in dem zähharten bzw. teilkristallinen Zustand vorliegt, bzw. die Erstarrungstemperatur des Materials ist material- und geometrieabhängig.

In einer Weiterbildung der Erfindung wird zumindest während des aktiven Kühlens des in den Hohlraum geförderten Materials eine Temperatur- und/oder Druckmessung an der Kühlvorrichtung und/oder an zumindest einer der Wandungen durchgeführt, um die Temperatur des Materials im Hohlraum und/oder den Druck im Hohlraum zu erfassen und dann zu regeln. Dies stellt eine konstruktiv und funktionell vorteilhafte Realisierung des Verfahrens dar. Durch die Temperatur- und/oder Druckmessung können die Temperatur und/oder der Druck und damit der Zustand des Materials im Hohlraum überwacht und dadurch sichergestellt werden, dass das im Hohlraum erstarrte Material vor dem Entfernen des mindestens einen Halteelements die Haltefunktion für das Einlegeteil erfüllt bzw. gewährleistet so weit es nötig ist.

In einer Weiterbildung der Erfindung wird vor dem Fördern des weiteren Materials in den Hohlraum zum vollständigen Füllen des Füllraums die erste Einspritzdüse verschlossen. Dies stellt eine konstruktiv und funktionell vorteilhafte Realisierung des Verfahrens dar. Das Fördern des weiteren Materials in den Hohlraum erfolgt vorzugsweise durch die zweite Einspritzdüse. Das erstarrte Material im Hohlraum liegt vorzugsweise vor dem Fördern des weiteren Materials in den Hohlraum an der ersten Einspritzdüse an und verschließt diese. Die zweite Einspritzdüse wird vorzugsweise vor dem Fördern des weiteren Materials in den Hohlraum zum vollständigen Füllen des Füllraums geöffnet, insbesondere wenn die Spritzgießvorrichtung lediglich eine Plastifiziereinheit für beide Einspritzdüsen gemeinsam aufweist.

In einer Weiterbildung der Erfindung erfolgt nach dem vollständigen Füllen des Füllraums mit dem weiteren Material ein Kühlen dieses Materials, insbesondere ein aktives Kühlen dieses Materials. Dies stellt eine konstruktiv und funktionell vorteilhafte Realisierung des Verfahrens dar, insbesondere hinsichtlich seiner Produktivität, da ein Kühlen, insbesondere aktives Kühlen, die Temperatur des eingespritzten Materials schnell senkt und dieses schnell erstarrt. Dabei wird das Kühlen des weiteren Materials vorzugsweise mittels derselben zuvor beschriebenen Kühlvorrichtung durchgeführt.

Die erfindungsgemäße Spritzgießvorrichtung zur Durchführung des zuvor beschriebenen Verfahrens weist ein Formwerkzeug mit einem Hohlraum mit Wandungen und eine erste und eine zweite Einspritzdüse zum Fördern eines spritz- oder gießfähigen Materials in das Formwerkzeug auf. Die Spritzgießvorrichtung umfasst mindestens ein Halteelement zum Fixieren des Einlegeteils in dem Hohlraum des Formwerkzeugs und eine aktive Kühlvorrichtung zum Kühlen des in den Hohlraum geförderten Materials. Vorteilhaft sind es mehrere Halteelemente, insbesondere zwei oder drei.

Die aktive Kühlvorrichtung ist vorzugsweise im Bereich nahe der ersten Einspritzdüse angeordnet. So kann sie gerade hier, wo erwartungsgemäß die Temperatur relativ hoch ist bzw. am höchsten ist, gut wirken.

Die Spritzgießvorrichtung kann auch mehr als zwei Einspritzdüsen aufweisen, wobei die weitere, insbesondere dritte, Einspritzdüse entweder zum teilweise Füllen oder zum vollständigen Füllen des Hohlraums mit dem Material eingerichtet ist.

Das Formwerkzeug ist vorzugsweise ein mindestens zweiteiliges Formwerkzeug. Es kann auch dreiteilig sein oder aus noch mehr Teilen bestehen.

In einer Weiterbildung der Erfindung weist die aktive Kühlvorrichtung als Kühlelement ein Peltier-Element auf. Dies stellt eine konstruktiv und funktionell vorteilhafte Realisierung der Kühlvorrichtung dar. Alternativ kann die Kühlvorrichtung ein Temperiergerät zur variothermen Temperierung, eine Kühleinheit mit Stickstoff oder dergleichen sein. Das Kühlelement ist vorzugsweise an zumindest einer der Wandungen angeordnet. Die aktive Kühlvorrichtung kann mehr als ein Kühlelement aufweisen, vorteilhaft dann an mehreren Wandungen. In alternativen Ausführungen weist das Formwerkzeug der Spritzgießvorrichtung eine Werkzeugtemperierung bzw. -kühlung auf, dabei wird ein Kühlmedium, wie zum Beispiel Wasser oder Öl, direkt durch das Formwerkzeug geleitet.

In einer Weiterbildung der Erfindung weist die Spritzgießvorrichtung mindestens einen Temperatursensor und/oder einen Drucksensor auf, der an der Kühlvorrichtung und/oder an zumindest einer der Wandungen angeordnet ist. Dies stellt eine konstruktiv und funktionell vorteilhafte Realisierung der Spritzgießvorrichtung dar. Der Temperatursensor und/oder der Drucksensor ermöglicht eine Temperatur- und/oder Druckmessung an der Kühlvorrichtung und/oder an zumindest einer der Wandungen, um die Temperatur des Materials im Hohlraum und/oder den Druck im Hohlraum zu regeln.

In einer Weiterbildung der Erfindung weist die Spritzgießvorrichtung eine Steuerung auf, die für eine Temperatur- und/oder Druckregelung ausgebildet ist und mit der Kühlvorrichtung verbunden ist. Dies stellt eine konstruktiv und funktionell vorteilhafte Realisierung der Spritzgießvorrichtung dar. Die Steuerung ist vorzugsweise auch mit dem zuvor beschriebenen Temperatursensor und/oder Drucksensor für eine Temperatur- und/oder Druckmessung verbunden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### KURZBESCHREIBUNG DER ZEICHNUNGEN

Vorteilhafte Ausführungsformen der Erfindung sind in den Zeichnungen dargestellt. Diese und weitere Ausführungsformen der Erfindung werden nachfolgend näher erläutert. Dabei zeigen:
- Fig. 1: eine schematische Draufsicht auf eine erste Ausführungsform einer Spritzgießvorrichtung zur Herstellung eines Bauteils durch vollständiges Umspritzen eines Einlegeteils, wobei das Einlegeteil und teilweise die Spritzgießvorrichtung geschnitten dargestellt sind, in einem geöffneten Zustand eines Formwerkzeugs der Spritzgießvorrichtung,
- Fig. 2: die Spritzgießvorrichtung aus Fig. 1, wobei das Einlegeteil von Halteelementen in einem Hohlraum des Formwerkzeugs in einer vorgegebenen Position fixiert ist,
- Fig. 3: die Spritzgießvorrichtung aus Fig. 2, wobei das Formwerkzeug geschlossen ist und spritz- oder gießfähiges Material mittels einer ersten Einspritzdüse in den Hohlraum gefördert wird,
- Fig. 4: die Spritzgießvorrichtung aus Fig. 3, wobei das Material in dem Hohlraum einen vorgegebenen Füllstand erreicht hat,
- Fig. 5: die Spritzgießvorrichtung aus Fig. 4, wobei das Material in dem Hohlraum durch aktives Kühlen mittels der Kühlvorrichtung erstarrt ist und die Halteelemente von dem Einlegeteil entfernt werden,
- Fig. 6: die Spritzgießvorrichtung aus Fig. 5, wobei die Halteelemente aus dem Hohlraum entfernt bzw. ausgefahren ist und weiteres spritz- oder gießfähiges Material mittels einer zweiten Einspritzdüse in den Hohlraum gefördert wird,
- Fig. 7: die Spritzgießvorrichtung aus Fig. 6, wobei der Hohlraum vollständig mit dem Material gefüllt ist und das Material in einem erstarrten Zustand vorliegt,
- Fig. 8: eine schematische Draufsicht auf eine zweite Ausführungsform der Spritzgießvorrichtung in einem Verfahrensschritt gemäß der Fig. 4, und
- Fig. 9: die Spritzgießvorrichtung aus Fig. 8 in einem Verfahrensschritt gemäß der Fig. 5.

### DETAILLIERTE BESCHREIBUNG DER AUSFÜHRUNGSBEISPIELE

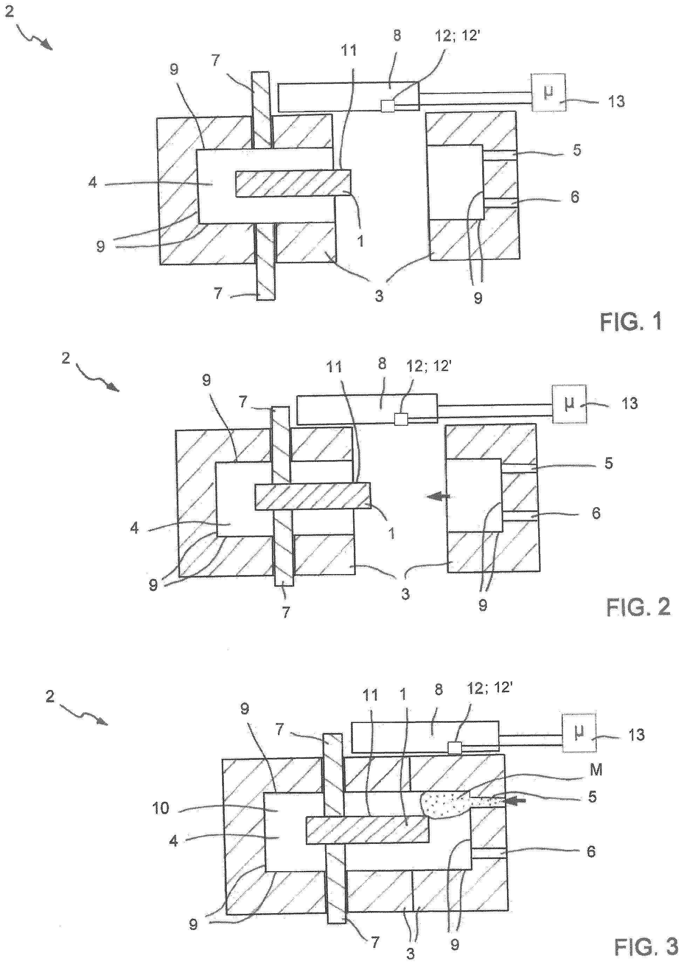

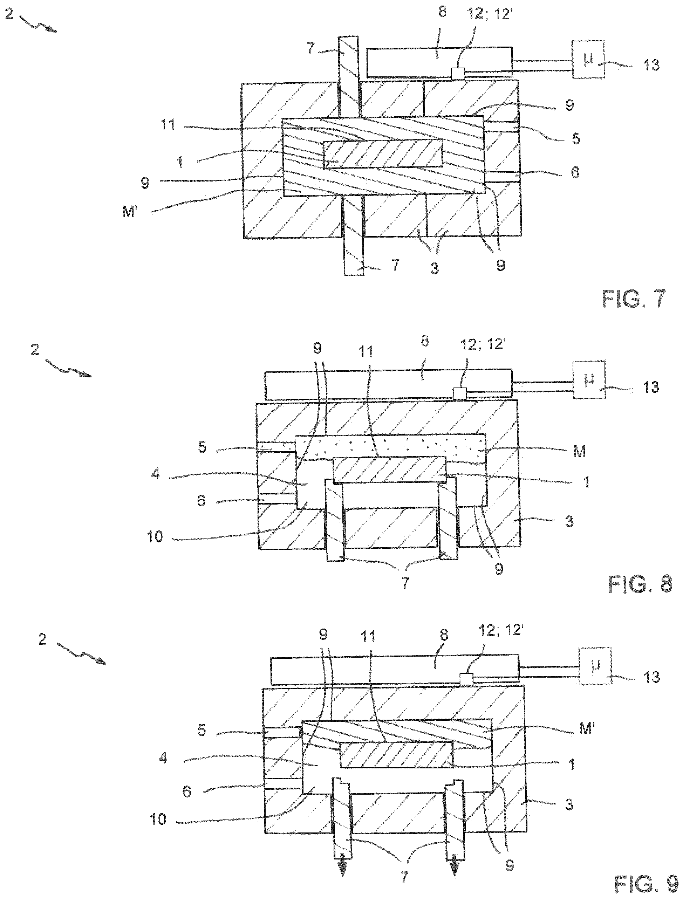

Wie in den Figuren anhand zwei exemplarischen Ausführungen veranschaulicht ist, weist die erfindungsgemäße Spritzgießvorrichtung 2 ein Formwerkzeug 3 sowie eine erste und eine zweite Einspritzdüse 5, 6 zum Fördern eines spritz- oder gießfähigen Materials M in das Formwerkzeug 3 auf. Das Formwerkzeug 3 weist einen Hohlraum 4 mit Wandungen 9 auf. Des Weiteren weist die Spritzgießvorrichtung 2 mindestens ein Halteelement 7 zum Fixieren des Einlegeteils 1 in dem Hohlraum 4 des Formwerkzeugs 3 und eine aktive Kühlvorrichtung 8 zum Kühlen des in den Hohlraum 4 geförderten Materials M auf. Die aktive Kühlvorrichtung 8 ist vorzugsweise im Bereich nahe der ersten Einspritzdüse 5 angeordnet, wie in den Fig. 3 und 9 dargestellt ist.

In den gezeigten Ausführungen weist die Spritzgießvorrichtung 2 zwei Halteelemente 7 auf. In nicht gezeigten Ausführungen kann die Spritzgießvorrichtung 2 lediglich ein einziges Halteelement 7 oder mehr als zwei Halteelemente 7 aufweisen, z.B. drei oder vier Halteelemente 7. In den gezeigten Ausführungen ist das Formwerkzeug 3 zweiteilig ausgeführt, wie insbesondere in den Fig. 1 und 2 gezeigt ist.

In einer konstruktiv vorteilhaften Ausführung ist die aktive Kühlvorrichtung 8 ein Peltier-Element. Das Peltier-Element ist vorzugsweise an zumindest einer der Wandungen 9 angeordnet, wie beispielsweise in der Fig. 3 gezeigt ist. Es kühlt also vorwiegend bzw. überwiegend diese Wandung. Bei nicht gezeigten Ausführungen weist die aktive Kühlvorrichtung 8 mehr als ein Peltier-Element auf, vorzugsweise jedes Peltier-Element an einer anderen Wandung. In alternativen Ausführungen weist das Formwerkzeug 3 eine Werkzeugtemperierung auf, wobei ein Kühlmedium, wie zum Beispiel Wasser oder Öl, direkt durch das Formwerkzeug 3 geleitet wird, wobei es auf bekannte Art und Weise kühlt bzw. Wärme abtransportiert.

In einer vorteilhaften Realisierung weist die Spritzgießvorrichtung 2 einen Temperatursensor 12 und/oder einen Drucksensor 12' auf, der an der Kühlvorrichtung 8 und/oder an zumindest einer der Wandungen 9 angeordnet ist, also auch an anderer Stelle angeordnet sein kann als hier dargestellt. Der Temperatursensor 12 und/oder der Drucksensor 12' ermöglicht eine Temperatur- und/oder Druckmessung an der Kühlvorrichtung 8 und/oder an zumindest einer der Wandungen 9, um die Temperatur des Materials M im Hohlraum 4 und/oder den Druck im Hohlraum 4 zu regeln. Bei nicht gezeigten Ausführungen ist der Temperatursensor 12 und/oder der Drucksensor 12' örtlich von der Kühlvorrichtung 8 beabstandet angeordnet.

In einer konstruktiv vorteilhaften Ausführung weist die Spritzgießvorrichtung 2 eine Steuerung 13 auf, die für eine Temperatur- und/oder Druckregelung ausgebildet ist und mit der Kühlvorrichtung 8 verbunden ist. Die Steuerung 13 ist vorzugsweise auch mit dem Temperatursensor 12 und/oder dem Drucksensor 12' für eine Temperatur- und/oder Druckmessung verbunden, wie in den Figuren gezeigt ist.

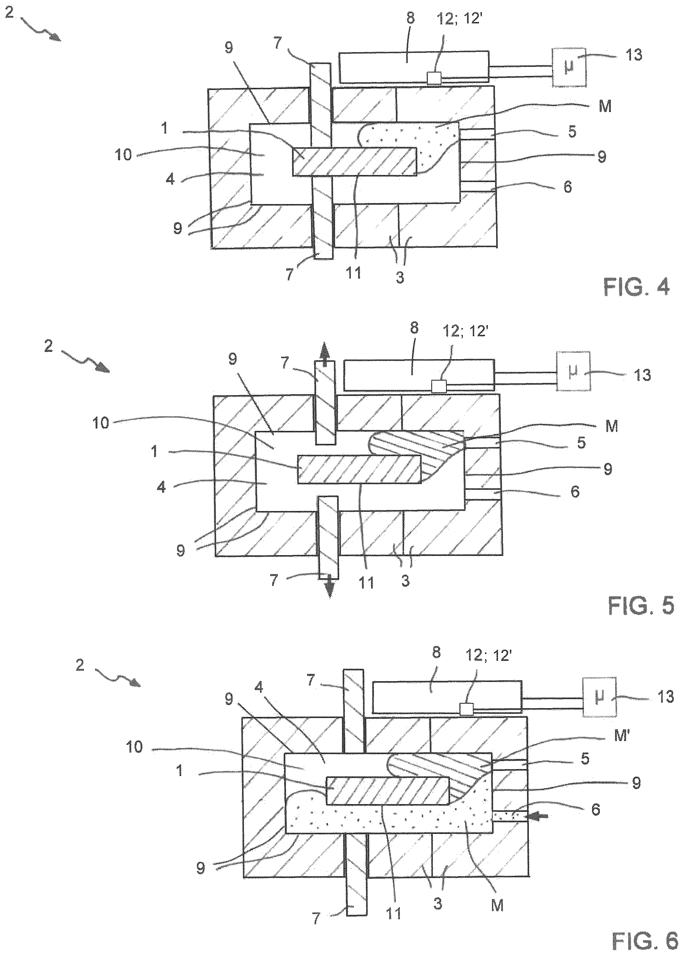

Bei dem erfindungsgemäßen Verfahren zur Herstellung eines Bauteils, insbesondere eines Hybrid-Bauteils, durch vollständiges Umspritzen eines Einlegeteils 1 mit der Spritzgießvorrichtung 2, wird zunächst dieses Einlegeteil 1 in den Hohlraum 4 zugeführt, wie in der Fig. 1 gezeigt ist. Anschließend wird das Einlegeteil 1 in dem Hohlraum 4 in einer vorgegebenen Position mittels der Halteelemente 7 fixiert, so dass es von den Wandungen 9 des Hohlraums 4 beabstandet angeordnet ist, insbesondere genau definiert angeordnet ist. Es begrenzt bzw. definiert gemeinsam mit diesen Wandungen 9 einen Füllraum 10, wie in der Fig. 2 dargestellt ist. Danach wird zum mindestens teilweisen Füllen des Füllraums 10 von rechts oben das Material M in den dort befindlichen Hohlraum 4 mittels der ersten Einspritzdüse 5 gefördert, so dass das Einlegeteil 1 teilweise von dem Material M umgeben ist, wie in den Fig. 3 und 4 gezeigt ist. Dabei wird vorteilhaft eine genau vorherbestimmte Menge an Material M in den Füllraum 10 eingebracht, um das Einlegeteil 1 später in dieser gezeigten Position halten zu können. Danach wird das in das Formwerkzeug 3 geförderte Material M mittels der Kühlvorrichtung 8 aktiv gekühlt, so dass das Material M erstarrt und das Einlegeteil 1 mittels des erstarrten Materials M' in der vorgegebenen Position fixiert ist, wie in der Fig. 5 gezeigt ist. Das erstarrte Material M' fungiert demnach als eine Art Halteelement für das Einlegeteil 1. Es liegt zumindest in einem zähharten bzw. teilkristallinen, vorzugsweise in einem harten bzw. kristallinen, Zustand vor. Anschließend werden alle Halteelemente 7 von dem Einlegeteil 1 entfernt, und zum vollständigen Füllen des Füllraums 10 mit dem Material M wird weiteres spritz- oder gießfähiges Material M in den Hohlraum 4 mittels der zweiten Einspritzdüse 6 gefördert, wie in der Fig. 6 dargestellt ist.

In vorteilhaften Ausführungen sind die Halteelemente 7 beweglich in dem Hohlraum 4 angeordnet, wobei sie zum Fixieren des Einlegeteils 1 durch Anlegen an eine Oberfläche 11 des Einlegeteils 1 in den Hohlraum 4 hinein bewegt werden. Zum Entfernen werden die Halteelemente 7 von der Oberfläche 11 des Einlegeteils 1 weg bewegt. Die Halteelemente 7 werden aus dem Hohlraum 4 hinausbewegt, wobei vorzugsweise eine dem Einlegeteil 1 zugewandte Stirnseite der Halteelemente 7 bündig mit einer der Wandungen 9 des Hohlraums 4 bzw. des Formwerkzeugs 3 ist, wie insbesondere in der Fig. 6 gezeigt ist. So kann eine gewünschte Formgebung erreicht werden.

In einer vorteilhaften Realisierung erfolgt das teilweise Füllen des Füllraums 10 mit dem Material M zum Fixieren des Einlegeteils 1 bis zu einem vorgegebenen Füllstand, vorzugsweise bis zu 20% bis 70% oder 35% bis 50% des Volumens des Füllraums 10, wie insbesondere in den Fig. 4 und 8 gezeigt ist. In vorteilhaften Ausführungen erfolgt das teilweise Füllen des Füllraums 10 mit dem Material M bis zu einem Füllstand, bei welchem das Einlegeteil 1 zumindest zu 30%, vorzugsweise zumindest zu 50%, von dem Material M umgeben ist und/oder bei welchem mindestens zwei Seiten des Einlegeteils 1 mit dem Material M zumindest teilweise umgeben sind, insbesondere zumindest zu 30% bis 60%.

In den gezeigten Ausführungen gemäß der Fig. 4 und 8 ist das Einlegeteil 1 zumindest zu 30% von dem Material M umgeben. Mindestens zwei Seiten des Einlegeteils 1 sind mit dem Material M zumindest teilweise umgeben.

Durch das Vorgeben eines Füllstands mit dem Material M kann sichergestellt werden, dass das Einlegeteil 1 durch das erstarrte Material M' in seiner vorgegebenen Position fixiert ist bzw. in dieser verbleibt. Dies gilt insbesondere vor und während des Förderns weiteren spritz- oder gießfähigen Materials M in den Hohlraum 4 mittels der zweiten Einspritzdüse 6.

In einer vorteilhaften Ausführung erfolgt das teilweise Füllen des Füllraums 10 mit dem Material M in einem vor dem mindestens einen Halteelement 7 abgewandten Bereich des Füllraums 10, wie insbesondere in den Fig. 3 und 8 gezeigt ist.

In vorteilhaften Ausführungen erfolgt das aktive Kühlen des in den Hohlraum 4 geförderten Materials M mittels der Kühlvorrichtung 8 innerhalb von 10 sec, vorzugsweise innerhalb von 5 sec, und zwar abhängig von Material und/oder Geometrie. Eine Dauer von wenigen Sekunden wird hier als ausreichend angesehen. Dabei ist die Dauer von den Material- und Produkteigenschaften abhängig.

In einer vorteilhaften Realisierung wird das in den Hohlraum 4 geförderte Material M mittels der Kühlvorrichtung 8 auf eine Temperatur von unter 190°C bis 240°C gekühlt, und zwar wieder abhängig von Material und/oder Geometrie. Dies kann beispielsweise eine Temperaturdifferenz von 20°C bis 50°C des zuerst gießfähigen Materials M sein, alternativ auch deutlich mehr.

In alternativen Ausführungen wird das in den Hohlraum 4 geförderte Material M mittels der Kühlvorrichtung 8 um 120°C bis 210°C herunter gekühlt, insbesondere auf 150°C bis 200°C. Die Temperatur, bei welchem das Material M zumindest in dem zähharten bzw. teilkristallinen Zustand vorliegt, bzw. die Erstarrungstemperatur des Materials M ist material- und geometrieabhängig

In vorteilhaften Realisierungen wird zumindest während des aktiven Kühlens des in den Hohlraum 4 geförderten Materials M eine Temperatur- und/oder Druckmessung an der Kühlvorrichtung 8 und/oder an einer der Wandungen 9 durchgeführt, um die Temperatur des Materials M im Hohlraum 4 und/oder den Druck im Hohlraum 4 zu bestimmen und dann zu regeln. Mit einer solchen Temperatur- und/oder Druckmessung können die Temperatur und/oder der Druck und damit der Zustand des Materials M im Hohlraum 4 überwacht und dadurch sichergestellt werden, dass das im Hohlraum 4 zu erstarrende bzw. erstarrte Material M, M' vor dem Entfernen der Halteelemente 7 die Haltefunktion für das Einlegeteil 1 erfüllt.

In einer vorteilhaften Ausführung kann vor dem Fördern des weiteren Materials M in den Hohlraum 4 zum vollständigen Füllen des Füllraums 10 die erste Einspritzdüse 5 verschlossen werden. Je nach Material und Ausführung kann dies nicht notwendig sein, da sich davor das erstarrte Material M' befindet und die Einspritzdüse 5 quasi verschließt bzw. abdeckt.

In den gezeigten Ausführungen erfolgt das Fördern des weiteren Materials M in den Hohlraum 4 vorzugsweise ausschließlich durch die zweite Einspritzdüse 6, wie in der Fig. 6 gezeigt ist, oder durch weitere Einspritzdüsen, jedenfalls nicht durch die zuvor verwendete Einspritzdüse 5. Vor dem Fördern des weiteren Materials M in den Hohlraum 4 liegt das erstarrte Material M' vorzugsweise an der ersten Einspritzdüse 5 an und verschließt diese, wie in den Fig. 5 und 9 gezeigt ist.

In einer vorteilhaften Realisierung erfolgt nach dem vollständigen Füllen des Füllraums 10 mit dem weiteren Material M ein, vorzugsweise aktives, Kühlen auch dieses weiteren Materials M, vorzugsweise mittels derselben Kühlvorrichtung 8. Alternativ kann eine zusätzliche, andere Kühlvorrichtung verwendet werden, die beispielsweise unten an dem Formwerkzeug anliegt.

Wie die gezeigten und die weiteren oben erwähnten Ausführungsbeispiele deutlich machen, stellt die Erfindung ein Verfahren zur Herstellung eines Bauteils durch vollständiges Umspritzen eines Einlegeteils mit einer Spritzgießvorrichtung und eine Spritzgießvorrichtung zur Verfügung, die gegenüber herkömmlichen Verfahren bzw. Vorrichtungen verbesserte Eigenschaften insbesondere hinsichtlich Funktionsweise, Dichtheit, Positioniergenauigkeit des Einlegeteils und/oder Produktivität bieten.

## Patentansprüche

1. Verfahren zur Herstellung eines Bauteils, insbesondere eines Hybrid-Bauteils, durch vollständiges Umspritzen eines Einlegeteils (1) mit einer Spritzgießvorrichtung (2), wobei die Spritzgießvorrichtung (2) aufweist:
- ein Formwerkzeug (3) mit einem Hohlraum (4) mit Wandungen (9),
- einer ersten und einer zweiten Einspritzdüse (5, 6) zum Fördern eines spritz- oder gießfähigen Materials (M) in das Formwerkzeug (3),
- mindestens ein Halteelement (7) zum Fixieren des Einlegeteils (1) in dem Hohlraum (4) des Formwerkzeugs (3), und
- eine aktive Kühlvorrichtung (8) zum Kühlen des in den Hohlraum (4) geförderten Materials (M),
mit den Schritten:
- Zuführen des Einlegeteils (1) in den Hohlraum (4),
- Fixieren des Einlegeteils (1) in dem Hohlraum (4) in einer vorgegebenen Position mittels des mindestens einen Halteelements (7), so dass das Einlegeteil (1) von den Wandungen (9) des Hohlraums (4) beabstandet angeordnet ist und gemeinsam mit diesen Wandungen (9) einen Füllraum (10) begrenzt,
- Fördern des Materials (M) in den Hohlraum (4) mittels der ersten Einspritzdüse (5) zum mindestens teilweisen Füllen des Füllraums (10) mit dem Material (M), so dass das Einlegeteil (1) teilweise von dem Material (M) umgeben ist,
- aktives Kühlen des in das Formwerkzeug (3) geförderten Materials (M) mittels der Kühlvorrichtung (8), so dass das Material (M) erstarrt und das Einlegeteil (1) mittels des erstarrten Materials (M`) in der vorgegebenen Position fixiert ist,
- Entfernen des mindestens einen Halteelements (7) von dem Einlegeteil (1) und
- Fördern weiteren spritz- oder gießfähigen Materials (M) in den Hohlraum (4) mittels der zweiten Einspritzdüse (6) zum vollständigen Füllen des Füllraums (10) mit dem Material (M).

2. Verfahren nach Anspruch 1, **dadurch gekennzeichnet, dass** das mindestens eine Halteelement (7) beweglich in dem Hohlraum (4) angeordnet ist, wobei das mindestens eine Halteelement (7) zum Fixieren des Einlegeteils (1) durch Anlegen an eine Oberfläche (11) des Einlegeteils (1) in den Hohlraum (4) hinein bewegt wird und zum Entfernen von dem Einlegeteil (1) von der Oberfläche (11) des Einlegeteils (1) weg bewegt wird, vorzugsweise aus dem Hohlraum (4) hinaus bewegt wird.

3. Verfahren nach Anspruch 1 oder 2, **dadurch gekennzeichnet, dass** das teilweise Füllen des Füllraums (10) mit dem Material (M) bis zu einem vorgegebenen Füllstand erfolgt, vorzugsweise bis zu 20% bis 70% des Volumens des Füllraums (10).

4. Verfahren nach einem der vorhergehenden Ansprüche, **dadurch gekennzeichnet, dass** das teilweise Füllen des Füllraums (10) mit dem Material (M) bis zu einem Füllstand erfolgt, bei welchem das Einlegeteil (1) zumindest zu 30%, vorzugsweise zumindest zu 50%, von dem Material (M) umgeben ist und/oder bei welchem mindestens zwei Seiten des Einlegeteils (1) mit dem Material (M) zumindest teilweise umgeben sind, insbesondere zumindest zu 30% bis 60%.

5. Verfahren nach einem der vorhergehenden Ansprüche, **dadurch gekennzeichnet, dass** das teilweise Füllen des Füllraums (10) mit dem Material (M) in einem dem mindestens einen Halteelement (7) abgewandten Bereich des Füllraums (10) erfolgt.

6. Verfahren nach einem der vorhergehenden Ansprüche, **dadurch gekennzeichnet, dass** das Kühlen des in den Hohlraum (4) geförderten Materials (M) mittels der Kühlvorrichtung (8) innerhalb von 10 s, vorzugsweise innerhalb von 5 s, erfolgt, insbesondere innerhalb von mindestens 2 s.

7. Verfahren nach einem der vorhergehenden Ansprüche, **dadurch gekennzeichnet, dass** das in den Hohlraum (4) geförderte Material (M) mittels der Kühlvorrichtung (8) auf eine Temperatur von unter 190°C bis 240°C gekühlt wird oder um 120°C bis 210°C herunter gekühlt wird.

8. Verfahren nach einem der vorhergehenden Ansprüche, **dadurch gekennzeichnet, dass** zumindest während des aktiven Kühlens des in den Hohlraum (4) geförderten Materials (M) eine Temperatur- und/oder Druckmessung an der Kühlvorrichtung (8) und/oder an zumindest einer der Wandungen (9) durchgeführt wird, um die Temperatur des Materials (M) im Hohlraum (4) und/oder den Druck im Hohlraum (4) zu regeln.

9. Verfahren nach einem der vorhergehenden Ansprüche, **dadurch gekennzeichnet, dass** vor dem Fördern des weiteren Materials (M) in den Hohlraum (4) zum vollständigen Füllen des Füllraums (10) die erste Einspritzdüse (5) verschlossen wird.

10. Verfahren nach einem der vorhergehenden Ansprüche, **dadurch gekennzeichnet, dass** nach dem vollständigen Füllen des Füllraums (10) mit dem weiteren Material (M) ein Kühlen dieses Materials (M) erfolgt, vorzugsweise mittels derselben Kühlvorrichtung (8).

11. Spritzgießvorrichtung (2) zur Durchführung des Verfahrens nach einem der vorhergehenden Ansprüche, aufweisend:
- ein Formwerkzeug (3) mit einem Hohlraum (4) mit Wandungen (9),
- einer ersten und einer zweiten Einspritzdüse (5, 6) zum Fördern eines spritz- oder gießfähigen Materials (M) in das Formwerkzeug (3),
- mindestens ein Halteelement (7) zum Fixieren des Einlegeteils (1) in dem Hohlraum (4) des Formwerkzeugs (3) und
- eine aktive Kühlvorrichtung (8) zum Kühlen des in den Hohlraum (4) geförderten Materials (M).

12. Spritzgießvorrichtung (2) nach Anspruch 11, **dadurch gekennzeichnet, dass** die aktive Kühlvorrichtung (8) ein Peltier-Element, ein Temperiergerät zur variothermen Temperierung oder eine Kühleinheit mit Stickstoff ist, die vorzugsweise an zumindest einer der Wandungen (9) angeordnet ist.

13. Spritzgießvorrichtung (2) nach Anspruch 11 oder 12, **dadurch gekennzeichnet, dass** die Spritzgießvorrichtung (2) einen Temperatursensor (12) und/oder einen Drucksensor (12`) aufweist, der an der Kühlvorrichtung (8) und/oder an zumindest einer der Wandungen (9) angeordnet ist.

14. Spritzgießvorrichtung (2) nach einem der Ansprüche 11 bis 13, **dadurch gekennzeichnet, dass** die Spritzgießvorrichtung (2) eine Steuerung (13) aufweist, die für eine Temperatur- und/oder Druckregelung ausgebildet ist und mit der Kühlvorrichtung (8) verbunden ist, vorzugsweise auch mit dem Temperatursensor (12) und/oder dem Drucksensor (12`) nach Anspruch 13 für eine Temperatur- und/oder Druckmessung.
